# EUROPEAN PATENT SPECIFICATION

(11) **EP 1 546 942 B1**
(45) Date of publication and mention of the grant of the patent: **19.07.2017**
(21) Application number: 03798258.4
(22) Date of filing: 18.08.2003
(51) Int. Cl.: G06F 17/30

(54) **SYSTEM AND METHOD FOR ASSOCIATING DIFFERENT TYPES OF MEDIA CONTENT**
SYSTEM UND VERFAHREN UM VERSCHIEDENE ARTEN VON MEDIENINHALTEN ZU VERBINDEN
SYSTEME ET PROCEDE D'ASSOCIATION DE DIFFERENTS TYPES DE CONTENUS MULTIMEDIA

(30) Priority: 24.09.2002 EP 02078955
(43) Date of publication of application: 29.06.2005
(73) Proprietor: S.I.SV.EL. SOCIETA' ITALIANA PER LO SVILUPPO DELL'ELETTRONICA S.P.A., 10060 None (TO) (IT)
(72) Inventor: VIGNOLI, Fabio, NL-5656 AA Eindhoven (NL); LASHINA, Tatiana, NL-5656 AA Eindhoven (NL)
(74) Representative: Camolese, Marco
(86) International application number: PCT/IB2003/003660
(87) International publication number: WO 2004/029835

(56) References cited:
- EP-A- 0 669 587
- WO-A-02/44842
- WO-A-98/06098
- WILKIE ET AL: "Multimedia Metadata - our 70 year experience" ON-LINE PUBLICATION, 16 September 1997 (1997-09-16), XP002127284

## Description

The invention relates to a system for operating with a first media content of a first type and a second media content of a second type different than the first type, said second media content not being associated by any reference in the system to the first media content, the system being arranged to concurrently render the first media content and the second media content to a user.

The invention also relates to a method of operating with a first media content of a first type and a second media content of a second type different than the first type, said second media content not being associated by any reference to the first media content, comprising the step of: concurrently rendering the first media content and the second media content to a user.

Document US2002/0002564A1 discloses data processing means for viewing, playback and delivery of continuous audiovisual data, media content such as motion pictures, video programs, audio programs, etc. The media content, e.g. MPEG-1 system stream or other format, and description data describing audio and video content are received by said means from outside, or said content and data can be stored in a database from which they can be retrieved. The description data are expressed through the use of, e.g. Extensible Markup Language (XML) whose standardization is pursued by the World Wide Web Consortium. The description data describe parameters of the audio and video content such as a title, caption, priority, location, start time, end time, etc. Video and audio streams of the media content are mutually synchronized and provided to video playback means and audio playback means. The media content is further rendered for the user. In the known data processing means, the user may request or disable simultaneous rendering of the provided audio and video contents. The user may choose to be provided with only the audio part or only the video part of the available media content.

In the known data processing means, the audio and video contents correspond to each other because they are received together from a content provider, e.g. a TV broadcaster or the like. At the same time, the user may like simultaneous rendering of media contents which are not related by the content provider. It is a drawback of the prior art that user's preferences with respect to rendering the different contents are not taken into account.

WO 98/06098 discloses a non-linear editing system for home audio and video applications. It includes a compression/decompression engine, a high capacity storage device and a media editor that provides point and click audio and video editing functionality, including recording, playback and special effects, such as real time gamma correction, color effects, 2D effects and real time fades, using a time-line system. The compression/decompression engine includes electronic circuitry designed to implement high speed data compression and decompression using JPEG, MPEG, or wavelet techniques. The high capacity storage device typically comprises internal and external non-linear magnetic storage devices, such as Enhanced IDE or SCSI hard drives, although other non-linear storage devices, such as magneto-optical or optical disk drives may be used. Similarly, the system includes input/output (I/O) capability for video in composite NTSC or PAL formats including SVHS resolutions, analog and digital stereo audio in 16-bit CD format, multimedia inputs, such as clip art and synchronized audio/video, from CD-ROMs and DVDs, a Musical Instrument Digital Interface (MIDI) and Internet connectivity through strandard telephone lines using a modem and through cable TV lines. The system does not require the use of a computing device, such as a personal computer, to perform its non-linear editing functions.

It is an object of the present invention to provide a system for operating with different types of media content of the kind defined in the opening paragraph which does take into account the user's preferences with respect to simultaneous rendering of the different contents.

The object of the invention is realized in that the system comprises identifying means; associating means and storage means; wherein the identifying means are arranged for identifying that the first media content and the second media content are concurrently rendered and outputting information concerning the concurrent rendering of the first media content and the second media content to the associating means, the associating means are arranged for associating said second media content with the first media content by establishing data which link said associated first and second media content and the storage means are arranged to store the data.

The contents of different types, e.g. audio and video, which are not associated by any reference in any way in the system may be related in the user's mind. For example, the user may like simultaneous rendering of some contents of the different types, or the combination of the contents may carry the user back to some life experience, or the like. The system comprises identifying means and associating means for "registering" the relationship between such contents in the system. The identifying means identifies that the user uses, e.g. watches, listens to, etc, a first content of a first type and, possibly in a different way, a second content of a second type at the same time, wherein said first and second contents are not related in the system. The associating means associates said first and second contents to enable the system to exploit this relationship.

One of the advantages of the present invention is that the user does not have to explicitly instruct the system to relate such contents because it may be done automatically and transparently for the user without hindering the user's usage of said contents. Another advantage is that the links between contents are made personal to the user of the system, which is not possible when the contents, e.g. a TV program or a movie which usually include audio and video, are obtained from the content provider.

The object of the present invention is also realized in that the method of operating with a first media content of a first type and a second media content of a second type different than the first type further comprises a step of identifying that the first media content and the second media content are concurrently rendered and outputting information concerning the concurrent rendering of the first media content and the second media content, a step of associating said second content with the first content by establishing data which link said associated first and second media content and a step of storing the data. The method describes the functioning of the system of the present invention.

These and other aspects of the invention will be further elucidated and described with reference to the accompanying drawings, wherein:
Fig. 1 illustrates the general scheme of the present invention;
Fig. 2 shows a functional block diagram of the system suitable for implementing the present invention;
Fig. 3 shows an example of the associated contents of different types and the relationship between them;
Fig. 4 shows an example of a time sequence of the user's usage of different media contents;
Fig. 5 shows an embodiment of the method of the present invention.

Throughout the Figures, the same reference numerals indicate identical or corresponding components.

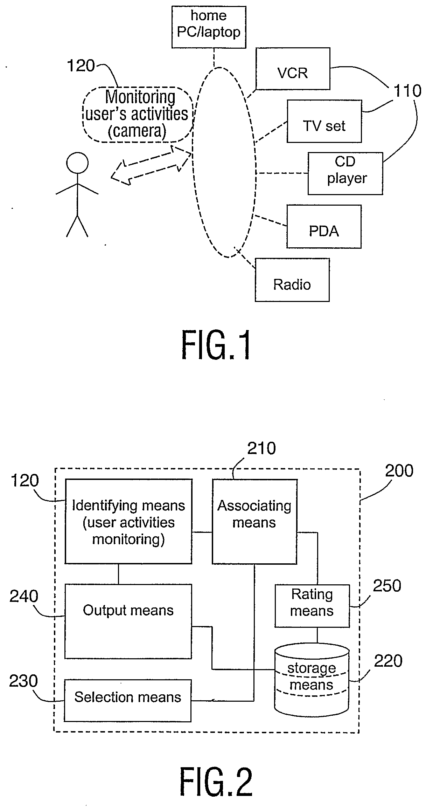

Many people today use a lot of media content. People watch, listen, browse different audio and video information, as well as create their own media content, e.g. by voice recording, taking pictures using a camera, making a home film, etc. Various consumer electronic devices 110 such as a television set (TV set) with a cable, satellite or other link, video cassette recorder (VCR), home stereo, internet broadcasts, world wide web, portable and stationary radio, CD player, personal digital assistant (PDA), etc. can be used for these purposes, as is shown in Fig. 1. Each of these devices may have a user interface used to obtain, select, record, play, etc. the media content. Any one of the consumer electronic devices allows the user to use at least one media content, and some of these devices may output or input at least two contents of different types. The system according to the present invention comprises identifying means 120 for identifying that the user concurrently uses at least two contents of different types, whereas these contents are not unrelated in the system, e.g. the system does not include data indicating the relation between said contents. Such identifying means 120 may be any means capable of monitoring user's activities in the system, e.g. a monitoring camera connected to a dedicated data processing unit which is arranged to analyze the user's behavior by processing data obtained from the camera, said data processing unit may be a part of the consumer electronic device rendering the media content.

One or many media devices capable of outputting and/or inputting the media content may be included in the system. When a plurality of such devices is included, they may have means (not shown) for communicating with each other, e.g. the devices may be connected into a network. The communication means may be arranged to obtain information about the user's usage of the content from each of the devices, and recognizing individual devices providing said information. For example, each device outputs to the communication means its identification and information pertaining to the contents used by the user, e.g. the type of the used content(s) which may be one of predetermined types in the system, etc. Further details which concern functioning of the identifying means will be apparent to the person skilled in the art.

The media content may basically comprise at least one or any combination of visual information, audio information, text, data describing the media content or its reproduction, or the like. The expression audio data, or audio content, is hereinafter used as data pertaining to audio comprising audible tones, silence, speech, music, tranquility, external noise or the like. The expression video data, or video content, is used as data which are visible such as a motion picture, static image, characters etc. The user device may be arranged to obtain the media content stored on different carriers such as, audio tapes, video tapes, optical storage discs, floppy and hard drive disks, etc. in any format, e.g. MPEG (Moving Picture Experts Group), MIDI (Musical Instrument Digital Interface), Shockwave, QuickTime, WAV (Waveform Audio), etc. The content may also be broadcast by a content provider, e.g. TV or radio, to be received by the user devices rendering said content for the user. The user may use the media content at home, public places, in public transport and so on. Examples of the different types of content may be a playlist of songs or music, moving pictures, still images or sets of the still images, e.g. an image slide, animation, text, meta-data related to the media content, etc. For instance, the meta-data may define the radio content, e.g. radio stations and the most frequently broadcast content that is available in the user's living area, the different kinds of playlists for setting up a collection of the media contents. The meta-data may, for example, include the music playlist, e.g. in which the next song is started when the current one ends, the radio station or television channel playlist, e.g. comprising a collection of favorite channels to watch or surf through.

With reference to Fig. 2, a functional block diagram of the system of the present invention is shown. The system 200 comprises the identifying means 120 and associating means 210 for associating said two or more contents, simultaneous use of which is identified by the identifying means 120. The identifying means outputs to associating means the information concerning the contents concurrently used in the system. The associating means may be arranged to establish data which link said associated contents, such as meta-data comprising the information pertaining to a relationship between the associated contents. In one example, the meta-data may include information about the associated contents such as a name/title, source of or link to the contents, e.g. identification of the device(s) used for rendering the content; observed user's behavior during the use of the content(s), e.g. types of the user's behavior like watching, listening, etc. may be predetermined, whether or not the user initiated the content rendering, date, start and/or end time of the content usage, duration of rendering, etc. as is shown in Table 1. Of course, some of the information included in the meta-data may be obtained from the identifying means 120.

**TABLE 1**

| Nº | Name/title | Source/link | User's behavior | Initiated by user | Start date/ time | Duration | Rating |
|---|---|---|---|---|---|---|---|
| n-1 | | | | | | | |
| n | "Content A" | PC: D:\clips\ clipN | Watching | Yes | 07/07/ 02 01:30p .m | 00:29: 37 | 0,5 |
| | "Content B" | Radio: songN | Disregard | No | 07/07/ 02 01:36p .m | | |
| n+1 | "Content C" | PC: C:\video\fragment N | Watching | Yes | 09/07/ 02 06:12p .m | 00:12: 13 | 1,0 |
| | "Content D" | CD-player: Disc"AlbumA"\ trackN | Listening | Yes | 09/07/ 02 06:06p .m | | |
| n+2 | | | | | | | |

The associating means may be arranged to associate the contents automatically or to communicate information pertaining to the contents to the user for obtaining his/her approval for associating these contents. The system may also simply notify the user about associating the corresponding contents.

The system may optionally comprise storage means 220 arranged to store the meta-data, selection means 230 arranged to select the content, output means 240 arranged to output the associated contents, and rating means 250 arranged to rate the associated content.

The meta-data may be implemented in any standard data structure or database, any language, e.g. XML, and include any amount of information about the associated contents which is sufficient to distinguish them. In one example, the meta-data may be stored in the storage means 220 together with the corresponding contents, e.g. in a header of the corresponding media data. The new meta-data may be established whenever some contents are associated by the associating means. Thus, a plurality of meta-data records may be stored by the storage means.

Given meta-data storing information about two associated contents, the selection means 230 may be arranged to identify the first content upon selection of the associated second content, and vice versa. Thus, the system can always find all associated contents if one of them is selected and the relationship between these associated contents has been established. The output means may be arranged to play, reproduce, etc. the associated contents simultaneously.

The selection means may be further arranged to function as a recommender of the media content. The recommender may exploit the meta-data for recommending the content in accordance with the user's preferences. In that way, the recommendations can be personalized for the user.

The recommender may be arranged to recommend the associated contents if the user selects one content and likes to be recommended with another content of different type in accordance with his/her preferences. The recommender may be further arranged to recommend contents correlating to one of the associated contents e.g. having a similar subject, topic, category, genre, etc. For example, if the song and clip are associated, the recommender may recommend, upon the selection of the clip, the associated song and other songs which are similar to the associated song.

The recommender may be arranged to recommend the content on the basis of ratings provided by the rating means 250. The meta-data may be interpreted in different ways for rating them, e.g. as an explicit or implicit feedback from the user. For example, the media contents may be considered as explicitly associated by the user if the user has explicitly initiated reproduction, or the other way of a user's consumption, of both media contents, e.g. user's requests for rendering the contents were inputted to the system. The rating means 250 may highly rate such association of the contents, or a high reliability may be assigned to such an association. As shown in Table 1, the (N+1) meta-data record indicates that the user initiated displaying the video content C and playing the audio content D. Therefore, the contents C and D are associated with the maximum rating, for example with one point as a maximal possible rating. If one of the contents was not explicitly chosen for rendering or using it otherwise by the user, then the association of these contents may be rated to be lower or given less reliability. For example, in Table 1 the contents A and B are associated with a rating lower than the rating of contents C and D, namely with 0.5 point out of 1, because the content B, a song, was played on the radio, and the user did not initiate this.

Other criteria for evaluating the association of the contents may be used by the rating means. For example, the association of the media contents may also be influenced by the user's behavior during simultaneous rendering of the content, a user's reaction for initiating simultaneous rendering of the contents when it was started by the system itself, and so on. Other parameters and characteristics of the associated contents, user's usage of the associated contents, etc. may be stored in the meta-data and used for their rating.

In a further embodiment, the rating means may rate the associated contents depending on the number of times of using the associated contents simultaneously. For instance, if the contents were often used together, they are given a high rating.

In a further embodiment, if the first content is associated with the second content and with a third content, the rating means may be arranged to rate said associations of the first content with the second content, and the first content with the third content differently. For example, the association of the first content and second content may be rated to be higher if the first content was more often used with the second content than with the third content. In another example, the association of the first content may be rated to be higher with the second content if the simultaneous usage of the first and second contents is more recent than the usage of the first and third contents. Thus, such associated contents are rated to be higher if they were recently used.

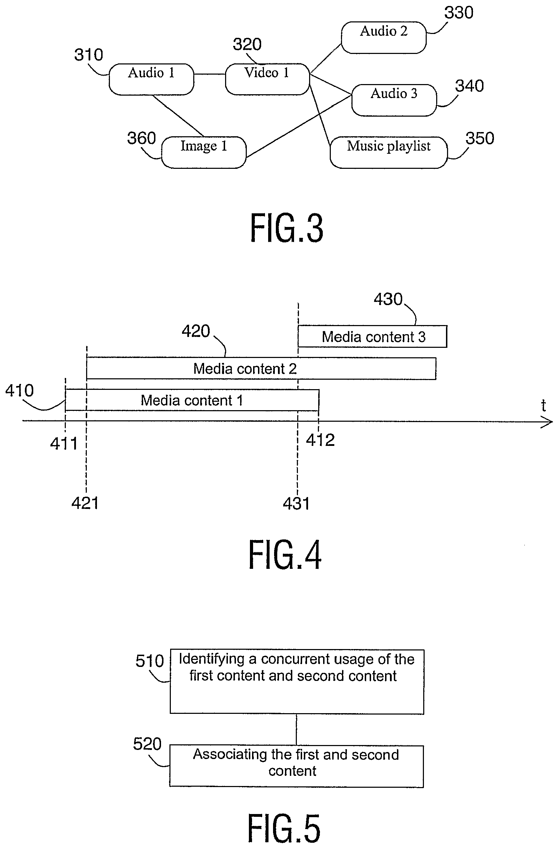

An example of associated contents is shown with reference to Fig. 3. Content "audio 1" 310 is associated with content "video 1" 320. Such an association illustrates the idea of the present invention about association of the contents of different types. At the same time, content "video 1" 320 may be further associated with the other contents of different type, e.g. "audio 2" 330, "audio 3" 340, etc. The type of content "music playlist" 350, which is also associated with content "video 1" 320, may be considered as a separate type of the content corresponding to the group of contents of type "music". In turn, contents "audio 1" 310 and "audio 3" 340 may be associated with content "image 1" 360 and content "video 1" 320. In this example, if the user selects content "audio 3" and requests the recommender to recommend the media content of type different from type "audio", the recommender may recommend contents "image 1" 360 and "video 1" 320 because they are associated with the user-selected content "audio 3" 340.

With reference to Fig. 4, an example of media contents used at different time in the system is shown. "Media content 1" 410 was used in the system from time T11 (411) till time T12 (412), "media content 2" 420 - from time T21 (421), "media content 3" 430 - from time T31 (431). Contents 410, 420 and 430 have different time lengths for their usage. The usage of content 410 was started earlier than the usage of content 420, though this difference in time (T21-T11) is much less than the duration (412-421) of the simultaneous usage of contents 410 and 420. The identifying means 120 may be arranged to provide a starting time, ending time, time of simultaneous usage of the contents to the associating means 210 for including said time information in the corresponding meta-data. The associating means may be arranged to estimate a ratio between the duration of simultaneous usage (412-421) of the corresponding contents and the time difference (T21-T11) or difference of times when the use of corresponding contents ends. In one example, the associating means may be arranged to ignore the simultaneous usage of the contents and the respective meta-data may not be established if the duration of simultaneous usage of them is much smaller than their usage non-overlapping in time. For example, the duration (412-431) of simultaneous usage of contents 410 and 430 is rather small with respect to the duration of their usage non-overlapping. The associating means may include a value of said estimated ratio in the respective meta-data. In another example, the rating means may rate the association of contents based on said ratio. For instance, the association of contents 410 and 420 may be rated to be higher than the association of contents 410 and 430 in view of the considerations above.

In one of the embodiments of the present invention, the selection means 230 may enable the user to modify the meta-data in the system. Of course, an appropriate user interface including input means, e.g. a keyboard, a mouse, a touch-screen, speech recognition means, etc. may be provided, and the output means 240 may be arranged to present the meta-data to the user via, for instance, a display device, audio reproduction means etc.

The identifying means, associating means, selection means and rating means may be implemented by using a microprocessor (not shown) coupled to a random access memory and a read-only memory (ROM) storing a program which, when executed by said microprocessor, can perform functions of said means as described above. The storage means 220 may be realized with said ROM. The media content may be stored locally in the system or downloaded from an external source by means of suitable arranged data receiving means (not shown). The realization of such a microprocessor system with corresponding internal and external circuits will be apparent to the person skilled in the art and need not be discussed herein.

With reference to Fig. 5, the method of the present invention describing the operation of the system of the present invention is shown. According to the method of operating with different types of media content, the concurrent usage of the first content and second contents of different types is identified in step 510, wherein the relationship of said contents is not known in the system. In step 520, said first and second contents are associated as being related by their simultaneous user's usage. For instance, the user may watch a slide show of pictures on the display screen together with a certain song being played by the CD player in the system, or the user may often listen to some songs when the user would like to download certain pictures. Such contents being used by the user simultaneously are associated. Embodiments of the method, which correspond to the above-described embodiments of the system of the present invention, may be envisaged.

The various program products may implement the functions of the system and method of the present invention and may be combined in several ways with the hardware or located in different devices. Variations and modifications of the described embodiment are possible within the scope of the inventive concept. Thus, for example, the use of the verb 'to comprise' and its conjugations does not exclude the presence of elements or steps other than those defined in a claim. The invention can be implemented by means of hardware comprising several distinct elements, and by means of a suitably programmed computer. In the device claim enumerating several means, several of these means can be embodied by one and the same item of hardware.

A 'computer program' is to be understood to mean any software product stored on a computer-readable medium, such as a floppy-disk, downloadable via a network, such as the Internet, or marketable in any other manner.

## Claims

1. A system for operating with a first media content of a first type and a second media content of a second type different than the first type, said second media content not being associated by any reference in the system to the first media content, the system being arranged to concurrently render the first media content and the second media content to a user, **characterized in that** the system comprises:
- identifying means (120);
- associating means (210) and
- storage means (220);
wherein the identifying means are arranged for identifying that the first media content and the second media content are concurrently rendered and outputting information concerning the concurrent rendering of the first media content and the second media content to the associating means,
the associating means are arranged for associating said second media content with the first media content by establishing data which link said associated first and second media content and
the storage means are arranged to store the data.

2. The system of claim 1, wherein the data is meta-data comprising information pertaining to a relationship between said associated first and second content.

3. The system of claim 1, further comprising selection means (230) arranged to select the first media content and/or the second media content.

4. The system of claim 3, wherein said selection means are further arranged to identify the first media content upon selection of the associated second media content and/or to identify the second media content upon selection of the associated first media content, using said stored data.

5. The system of claim 4, wherein said selection means are further arranged to function as a recommender for recommending the associated first or second media content upon a user-operable selection of one of said associated second and first media content, respectively, using said selection means.

6. The system of claim 4, further comprising output means (240) arranged to simultaneously output said associated first and second media content.

7. The system of claim 3, wherein said selection means are further arranged to user-operably modify said meta-data.

8. The system of claim 1, wherein said identifying means is arranged to identify a user's usage of a third media content of a second or other type, said usage being concurrent to said user's usage of the first media content, and said third media content being unrelated with the first media content, and wherein said associating means is arranged to associate said third and first media content, the system further comprising rating means arranged to rate said association of the first media content with the second media content and/or with the third media content.

9. The system of claim 1, comprising a plurality of devices (110), each device including output means arranged to output at least one of the first and second type of media content, and/or input means arranged to obtain at least one of the first and second type of media content.

10. The system of any one of the preceding claims, wherein said first and second media content correspond to video and audio content.

11. A method of operating with a first media content of a first type and a second media content of a second type different than the first type, said second media content not being associated by any reference to the first media content, comprising the step of:
concurrently rendering the first media content and the second media content to a user,
**characterized in that** the method further comprises:
- a step (510) of identifying that the first media content and the second media content are concurrently rendered and outputting information concerning the concurrent rendering of the first media content and the second media content,
- a step (520) of associating said second content with the first content by establishing data which link said associated first and second media content and
- a step of storing the data.

12. A computer program product enabling a programmable device, when executing said computer program product, to perform the steps as defined in claim 11.

## Patentansprüche

1. System zum Handhaben eines ersten Medieninhalts eines ersten Typs und eines zweiten Medieninhalts eines zweiten Typs, der unterschiedlich zum ersten Typ ist, wobei der zweite Medieninhalt nicht durch eine Referenz in dem System mit dem ersten Medieninhalt assoziiert ist, wobei das System eingerichtet ist, den ersten Medieninhalt und den zweiten Medieninhalt gleichzeitig für einen Benutzer wiederzugeben, **dadurch gekennzeichnet, dass** das System umfasst:
- Identifizierungsmittel (120);
- Assoziierungsmittel (210) und
- Speichermittel (220);
wobei die Identifizierungsmittel eingerichtet sind zu identifizieren, dass der erste Medieninhalt und der zweite Medieninhalt gleichzeitig wiedergegeben werden, und zum Ausgeben von Informationen betreffend die gleichzeitige Wiedergabe des ersten Medieninhalts und des zweiten Medieninhalts an die Assoziierungsmittel;
die Assoziierungsmittel eingerichtet sind zum Assoziieren des zweiten Medieninhalts mit dem ersten Medieninhalt durch Erzeugen von Daten, die den assoziierten ersten und zweiten Medieninhalt miteinander verbinden und
die Speichermittel eingerichtet sind, die Daten zu speichern.

2. System nach Anspruch 1, wobei die Daten Meta-Daten sind, die Informationen betreffend die Beziehung zwischen den assoziierten ersten und zweiten Inhalten umfassen.

3. System nach Anspruch 1, ferner umfassend Auswahlmittel (230), die eingerichtet sind, den ersten Medieninhalt und/oder den zweiten Medieninhalt auszuwählen.

4. System nach Anspruch 3, wobei die Auswahlmittel ferner eingerichtet sind, unter Verwendung der gespeicherten Daten den ersten Medieninhalt durch Auswahl des assoziierten zweiten Medieninhalts zu identifizieren und/oder den zweiten Medieninhalt durch Auswahl des assoziierten ersten Medieninhalts zu identifizieren.

5. System nach Anspruch 4, wobei die Auswahlmittel ferner eingerichtet sind als Empfehler zu funktionieren, um entsprechend den ersten oder zweiten Medieninhalt vorzuschlagen, nachdem unter Verwendung der Auswahlmittel eine benutzerdurchgeführte Auswahl eines der assoziierten zweiten und ersten Medieninhalte ausgewählt wurde.

6. System nach Anspruch 4, ferner umfassend Ausgabemittel (240), die eingerichtet sind, gleichzeitig den assoziierten ersten und zweiten Medieninhalt auszugeben.

7. System nach Anspruch 3, wobei die Auswahlmittel ferner eingerichtet sind, benutzerbedienbar die Meta-Daten zu modifizieren.

8. System nach Anspruch 1, wobei die Identifizierungsmittel eingerichtet sind, die Verwendung eines dritten Medieninhalts eines zweiten oder anderen Typs durch einen Benutzer zu identifizieren, wobei die Verwendung gleichzeitig zur Verwendung des ersten Medieninhalts durch den Benutzer erfolgt und der dritte Medieninhalt ohne Bezug zum ersten Medieninhalt ist, und wobei die Assoziierungsmittel eingerichtet sind, den dritten und ersten Medieninhalt miteinander zu assoziierten, wobei das System ferner Bewertungsmittel umfasst, die eingerichtet sind, die Assoziierung des ersten Medieninhalts mit dem zweiten Medieninhalt und/oder mit dem dritten Medieninhalt zu bewerten.

9. System nach Anspruch 1, umfassend mehrere Vorrichtungen (110), wobei jede Vorrichtung Ausgabemittel umfasst, die eingerichtet sind, zumindest einen des ersten und zweiten Typs eines Medieninhalts auszugeben und/oder Eingabemittel, die eingerichtet sind, zumindest einen des ersten und zweiten Typs des Medieninhalts zu erhalten.

10. System nach einem der vorhergehenden Ansprüche, wobei der erste und zweite Medieninhalt mit einem Video- und Audioinhalt korrespondieren.

11. Verfahren zum Handhaben eines ersten Medieninhalts eines ersten Typs und eines zweiten Medieninhalts eines zweiten Typs, der unterschiedlich zum ersten Typ ist, wobei der zweite Medieninhalt nicht mit dem ersten Medieninhalt durch eine Referenz assoziiert ist, umfassend die Schritte:
gleichzeitiges Wiedergeben des ersten Medieninhalts und des zweiten Medieninhalts für einen Benutzer, **dadurch gekennzeichnet, dass** das Verfahren ferner umfasst:
- einen Schritt (510) zum Identifizieren, das der erste Medieninhalt und der zweite Medieninhalt gleichzeitig wiedergegeben werden und zum Ausgeben von Informationen betreffend die gleichzeitige Wiedergabe des ersten Medieninhalts und des zweiten Medieninhalts,
- einen Schritt (520) zum Assoziieren des zweiten Inhalts mit dem ersten Inhalt durch Erzeugen von Daten, die den assoziierten ersten und zweiten Medieninhalt verbinden und
- einen Schritt zum Speichern der Daten.

12. Computerprogrammprodukt, das es einer programmierbaren Vorrichtung ermöglicht, wenn das Computerprogrammprodukt ausgeführt wird, die Schritte, wie in Anspruch 11 definiert, auszuführen.

## Revendications

1. Système d'exploitation avec un premier contenu multimédia d'un premier type et un deuxième contenu multimédia d'un deuxième type différent du premier type, ledit deuxième contenu multimédia n'étant associé par aucune référence dans le système au premier contenu multimédia, le système étant agencé pour restituer simultanément le premier contenu multimédia et le deuxième contenu multimédia à un utilisateur, **caractérisé en ce que** le système comprend :
- des moyens d'identification (120) ;
- des moyens d'association (210) et
- des moyens de stockage (220) ;
dans lequel les moyens d'identification sont agencés pour identifier que le premier contenu multimédia et le deuxième contenu multimédia sont simultanément restitués et fournir en sortie des informations concernant la restitution simultanée du premier contenu multimédia et du deuxième contenu multimédia aux moyens d'association, les moyens d'association sont agencés pour associer ledit deuxième contenu multimédia avec le premier contenu multimédia en établissant des données qui relient lesdits premier et deuxième contenus multimédias associés et
les moyens de stockage sont agencés pour stocker les données.

2. Système selon la revendication 1, dans lequel les données sont des métadonnées comprenant des informations se rapportant à une relation entre lesdits premier et deuxième contenus associés.

3. Système selon la revendication 1, comprenant en outre des moyens de sélection (230) agencés pour sélectionner le premier contenu multimédia et/ou le deuxième contenu multimédia.

4. Système selon la revendication 3, dans lequel les moyens de sélection sont en outre agencés pour identifier le premier contenu multimédia lors de la sélection du deuxième contenu multimédia associé et/ou pour identifier le deuxième contenu multimédia lors de la sélection du premier contenu multimédia associé, en utilisant lesdites données stockées.

5. Système selon la revendication 4, dans lequel lesdits moyens de sélection sont en outre agencés pour fonctionner comme un dispositif de recommandation destiné à recommander le premier ou deuxième contenu multimédia associé lors d'une sélection exploitable par utilisateur de l'un desdits deuxième et premier contenus multimédias associés, respectivement, à l'aide desdits moyens de sélection.

6. Système selon la revendication 4, comprenant en outre des moyens de sortie (240) agencés pour fournir simultanément en sortie lesdits premier et deuxième contenus multimédias associés.

7. Système selon la revendication 3, dans lequel lesdits moyens de sélection sont en outre agencés pour modifier de manière exploitable par l'utilisateur lesdites métadonnées.

8. Système selon la revendication 1, dans lequel lesdits moyens d'identification sont agencés pour identifier un usage par un utilisateur d'un troisième contenu multimédia d'un deuxième ou d'un autre type, ledit usage étant simultané audit usage par l'utilisateur du premier contenu multimédia, et ledit troisième contenu multimédia étant non relatif au premier contenu multimédia, et dans lequel lesdits moyens d'association sont agencés pour associer lesdits troisième et premier contenus multimédias, le système comprenant en outre des moyens de classement agencés pour classer ladite association du premier contenu multimédia avec le deuxième contenu multimédia et/ou avec le troisième contenu multimédia.

9. Système selon la revendication 1, comprenant une pluralité de dispositifs (110), chaque dispositif incluant des moyens de sortie agencés pour fournir en sortie au moins l'un parmi le premier et le deuxième type de contenu multimédia, et/ou des moyens d'entrée agencés pour obtenir au moins l'un parmi le premier et le deuxième type de contenu multimédia.

10. Système selon l'une quelconque des revendications précédentes, dans lequel lesdits premier et deuxième contenus multimédias correspondent à un contenu vidéo et audio.

11. Procédé d'exploitation avec un premier contenu multimédia d'un premier type et deuxième contenu multimédia d'un deuxième type différent du premier type, ledit deuxième contenu multimédia n'étant associé par aucune référence au premier contenu multimédia, comprenant l'étape de :
restituer simultanément le premier contenu multimédia et le deuxième contenu multimédia à un utilisateur,
**caractérisé en ce que** le procédé comprend en outre :
- une étape (510) d'identification selon laquelle le premier contenu multimédia et le deuxième contenu multimédia sont simultanément restitués et une fourniture en sortie d'informations concernant la restitution simultanée du premier contenu multimédia et du deuxième contenu multimédia,
- une étape (520) d'association dudit deuxième contenu avec le premier contenu par établissement de données qui relient lesdits premier et deuxième contenus multimédias associés et
- une étape de stockage des données.

12. Produit programme d'ordinateur permettant à un dispositif programmable, lorsqu'il exécute ledit produit programme d'ordinateur, de réaliser les étapes telles que définies dans la revendication 11.
